# EUROPÄISCHE PATENTSCHRIFT

(11) **EP 0 508 395 B1**
(45) Veröffentlichungstag und Bekanntmachung des Hinweises auf die Patenterteilung: **05.07.1995**
(21) Anmeldenummer: 92106059.6
(22) Anmeldetag: 08.04.1992
(51) Int. Cl.: H05K 9/00

(54) **Erdungsteil**
Grounding device
Dispositif pour mise à la terre

(30) Priorität: 09.04.1991 DE 9104298 U
(43) Veröffentlichungstag der Anmeldung: 14.10.1992
(73) Patentinhaber: Tridonic Bauelemente GmbH, 6850 Dornbirn (AT)
(72) Erfinder: Profunser, Herbert, A-6832 Muntlix (AT); Eberhart, Arthur, A-6850 Dornbirn (AT)
(74) Vertreter: Schmidt-Evers, Jürgen, Dipl.-Ing.

(56) Entgegenhaltungen:
- EP-A- 0 212 330
- DE-B- 1 245 465
- DE-U- 8 909 517
- DE-U- 9 104 298
- US-A- 4 856 060

## Beschreibung

Die Erfindung betrifft eine Anordnung zur Masseverbindung bei elektronischen Vorschaltgeräten für Leuchten oder dergleichen, aufweisend ein metallisches Bodenteil in Form eines U-Rahmens und eine mit elektrischen Bauteilen bestückte Leiterplatte, wobei die Masseverbindung von einer entsprechenden Leiterfläche der Leiterplatte aus über eine am Bodenteil vorgesehene nach oben wegragende Lasche erfolgt, deren Oberende durch eine Öffnung der Leiterplatte hindurchragt.

Ausgehend von dieser Anwendung, die meist noch einen Deckel aufweist, und so die elektrischen Bauelemente auf der Leiterplatte in ein Gehäuse einschließt, wird weiter die Masseverbindung über die Befestigung des Bodenteils an einem Leuchtengehäuse herbeigeführt.

Vorschaltgeräte, wie sie für mit Leuchtstofflampen versehene Leuchten verwendet werden, bedingen einen sehr großen Anteil an den Herstellkosten der gesamten Leuchte. Es ist daher erwünscht, die Herstellkosten weitgehend zu minimieren. Andererseits muß stets die Masseverbindung gewährleistet werden. Dies bedeutet, daß aufwendige Handarbeit wie die Herstellung von Schraubverbindungen vermieden werden soll.

Bei einer Lösung dieses Problems ist vorgeschlagen (DE-GM 89 09 517), den aus dem Bodenteil hochgebogenen Laschen eine besondere Ausführungsform zu geben, derart, daß Schultern gebildet sind und die Leiterfläche der Leiterplatte, die mit Masse zu verbinden ist, in Anlage gegen diese Schultern zu bringen. Vorzugsweise wird dies mittels eines als Federmutter bezeichneten Andrückgliedes, das über das durch die Öffnung hinausragende Oberende der Lasche geschoben werden muß, sichergestellt.

Die bekannte Ausgestaltung bedingt, daß die Leiterfläche, die mit Masse in Verbindung gebracht werden muß, sich unbedingt im Bereich der Öffnung befinden muß. Jedoch sind hierdurch Einschränkungen für den Verlauf der Leiterbahnen auf der Leiterplatte gegeben. Außerdem ist, um den sicheren Massekontakt zu gewährleisten ist das gesamte federnde Andrückglied erforderlich, wodurch ein zusätzlicher Arbeitsgang erforderlich ist, der in aller Regel nicht automatisierbar ist.

Ausgehend hiervon ist es Aufgabe der vorliegenden Erfindung, eine entsprechende Anordnung so weiterzubilden, daß in einfacher Weise ein sicherer Massekontakt auch ohne zusätzliche Arbeitsgänge bei der Montage gewährleistet werden kann.

Die Aufgabe wird durch ein wie ein elektrisches Bauteil in der Leiterplatte befestigtes und mit der Masse-Leiterplatte leitend verbundenes Erdungsteil gelöst, das ein Kontaktelement aufweist, das bei in die Leiterplatte eingesetztem Zustand so in den Bereich der Öffnung der Leiterplatte ragt, daß bei Einsetzen der Leiterplatte in das Bodenteil das Kontaktelement am Oberende der Lasche unter Anpressung anliegt.

Weiterbildungen der Erfindung ergeben sich aus den Unteransprüche.

Der wesentliche Vorteil der anmeldungsgemäßen Vorgehensweise ist darin zu sehen, daß das Kontaktelement wie die elektrischen Bauteile mit dem gleichen Arbeitsgang auf der Leiterplatte angeordnet werden können. Bei industriell gefertigten Produkten, wie es Vorschaltelemente sind, erfolgt die Bestückung der Leiterplatte mit den elektrischen Bauteilen sowie die anschließende elektrische Verbindung mit den Leiterbahnen, nämlich das Verlöten, automatisch. Zusätzliche Maßnahmen sind nicht erforderlich, ggfs. kann die bestückte Leiterplatte sogar von einem Automaten in das Bodenteil eingesetzt werden.

Die Erfindung wird anhand der in der Zeichnung dargestellten Ausführungsbeispiele näher erläutert. Es zeigen
- Fig.1.: einen Querschnitt,
- Fig.2.: einen Längsschnitt und
- Fig.3.: eine Aufsicht durch bzw. auf ein Vorschaltgerät, bei dem ein Erdungsteil gem. einer ersten Ausführungsform verwendet ist;
- Fig.4.: in Aufsicht und
- Fig. 5: in Seitenansicht das Erdungsteil gem. dem ersten Ausführungsbeispiel;
- Fig.6: im Teil-Längsschnitt ein Vorschaltgerät mit einem Erdungsteil gem. einer zweiten Ausführungsform der Erfindung;
- Fig.7.: in Aufsicht,
- Fig.8.: in Seitenansicht und
- Fig.9.: in Stirnansicht das Erdungsteil gem. dem zweiten Ausführungsbeispiel.

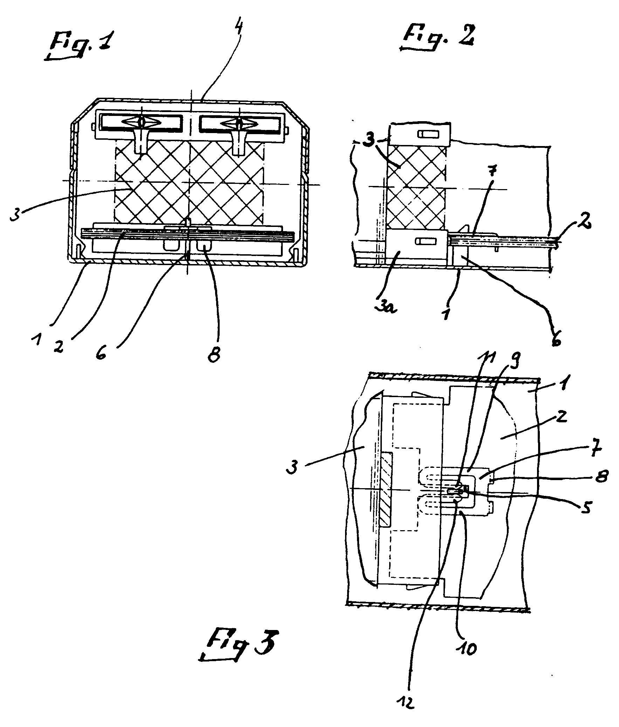

Fig.1 zeigt einen Querschnitt durch ein elektronisches Vorschaltgerät für Leuchten üblicher Bauart. Es weist ein als U-Rahmen ausgebildetes Bodenteil 1 auf, in dem eine Leiterplatte 2 abstützend gehaltert ist. Die Stützen hierfür sind nicht im einzelnen dargestellt. Es kann sich hierfür um am Bodenteil 1 befestigte oder aus dieser hochgebogene Laschen handeln, die schmale Oberenden aufweisen und in ihrem Verlauf Schultern besitzen. Die Leiterplatte 2 ruht über Öffnungen, Ausnehmungen oder dergleichen auf diesen Schultern. Die durch diese Öffnungen, Ausnehmungen und dergleichen ragenden Oberenden können jenseits der Leiterplatte 2 umgebogen sein und so die Leiterplatte in ihrer Lage fixieren. Die Leiterplatte 2 kann jedoch auch in anderer Weise abgestützt sein.

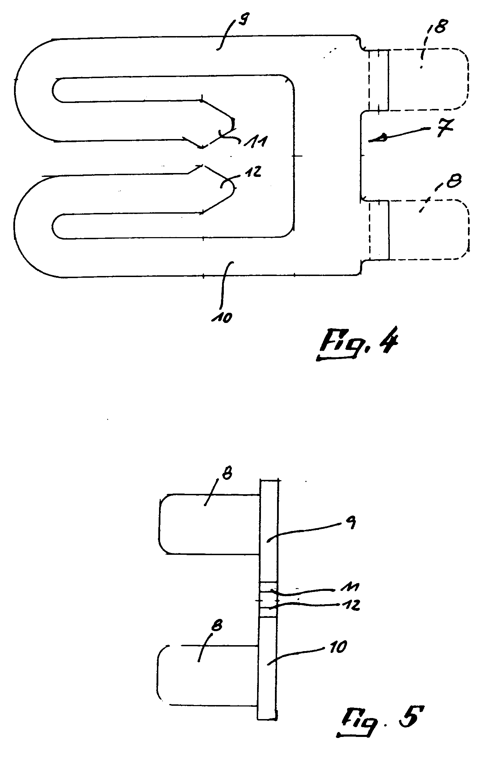

Auf der Leiterplatte 2 sind nicht dargestellte elektrische und elektronische Bauelemente wie Widerstände, Kondensatoren und dergleichen, angeordnet. Gemäß Fig.1 ist ein Transformator 3 vorgesehen der, vgl. Fig.2, bei diesem Ausführungsbeispiel neben der Leiterplatte 2 angeordnet ist. Beim Ausführungsbeispiel stützt sich die Leiterplatte 2 zum Teil an dem Transformator 3 ab (vgl. auch Fig.3.). Die in dem Bodenteil 1 angeordneten Elemente, nämlich die bestückte Leiterplatte 2 und der Transformator 3, sind durch ein Deckelteil 4 abgedeckt. Das Deckelteil 4 kann aus Kunststoff oder Metall bestehen und das Bodenteil 1 allseitig oder teilweise umgeben. Das aus Metall bestehende Bodenteil 1 und das Deckelteil 4 bilden so ein Gehäuse.

Die Leiterplatte 2 weist in ihrem dem Transformator 3 zugewandten Endabschnitt eine schlitzartige Öffnung 5 auf. Vom Boden des Bodenteils 1 ragt eine Lasche 6 nach oben durch diese Öffnung 5 der Leiterplatte 2 hindurch. Ein in den Fig. 4 und 5 alleine dargestelltes Erdungsteil 7 ist über Kontaktfahnen 8 in der Leiterplatte 2 befestigt insbesondere eingelötet, und zwar derart, daß die Lötverbindung der Kontaktfahnen 8 mit denjenigen Leiterflächen (nicht dargestellt) der Leiterplatte 2 erfolgt, mit denen die Masseverbindung erfolgen soll. Im Wesentlichen parallel zu Erstreckung der Leiterplatte 2 ragen zwei Kontaktzungen 9 und 10 vom Befestigungsort des Erdungsteils 7 über dessen Kontaktfahnen 8 weg in Richtung zur Öffnung 5. Beide Kontaktzungen 9, 10 sind in der erwähnten Ebene nochmals nach innen zurückgebogen, wobei die Spitzen 11 und 12 der beiden Kontaktzungen 9 bzw. 10 sich über einen Spalt gegenübeliegen, der im nicht in das Bodenteil 1 eingesetzten Zustand kleiner ist als die Dicke der Lasche 6. Diese Spitzen 11 und 12 sind weiter derart im Bereich der Öffnung 5 der Leiterplatte vorgesehen, daß sie beim Einsetzen der Leiterplatte 2 in das Bodenteil 1 im Bereich der Lasche 6 angeordnet sind und beim Einführen durch Auseinanderdrücken der Spitzen 11 und 12 in federnde Anlage gegen die Lasche 6 kommen.

Hierdurch ist eine sichere Masseverbindung erzielt.

Wie sich das insbesondere aus Fig. 4 ergibt, ist das Erdungsteil 7 ausgehend von einem flachen Blech-Stanzteil aus verzinntem Messing hergestellt, wobei lediglich die die Kontaktfahnen 8 bildenden Ansätze um 90° zur Ebene des Blech-Stanzteils umgebogen sind. Dieses Erdungsteil 7 ist in gleicher Weise wie elektronische und elektrische Bauelemente mittels eines Bestückungsautomaten handhabbar und kann daher beim automatischen Bestücken der Leiterplatte 2 mit der Leiterplatte 2 sowohl in mechanische als auch elektrische Verbindung gebracht werden. Hierdurch ist es möglich das Erdungsteil 7 an jedem gewünschten Ort auf der Leiterplatte 2 vorzusehen. Es kann auch mehrfach vorgesehen sein. Darüber hinaus ist es aus diesem Grunde einfach, die Anordnung der verschiedenen Bauelemente auf der Leiterplatte 2, auch kurzfristig, zu ändern, sofern lediglich sichergestellt ist, das eine durch eine Öffnung 5 in der Leiterplatte 2 ragende Lasche 6 am Bodenteil 1 vorgesehen ist.

Diese Lasche 6 kann dort befestigt sein oder dort nach Ausstanzen nach oben weggebogen sein, also ein sog. Hochriß-Teil bilden. Die Lasche 6 kann auch eine der erwähnten Stützen der Leiterplatte 2 sein und also eine Schulter aufweisen (nicht dargestellt).

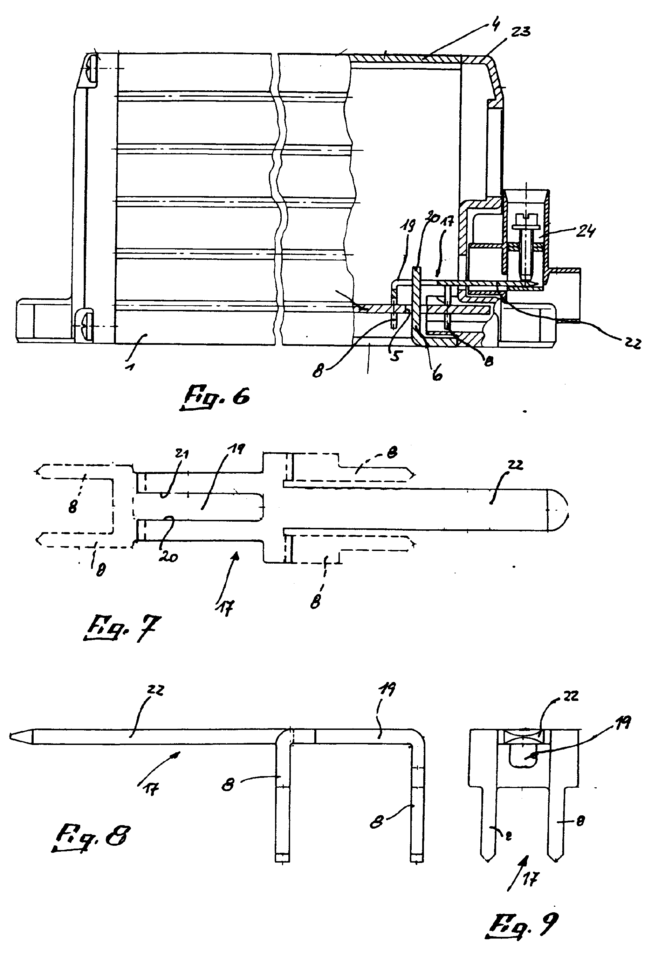

Fig.6 zeigt im Teilschnitt eine andere Ausführungform, wobei gleiche Elemente mit gleichen Bezugszeichen bezeichnet sind.

Das aus Metall bestehende Bodenteil 1, das ebenfalls nach Art eines U-förmigen Rahmens ausgebildet ist, weist ebenfalls einen Deckel 4 auf. In dem so gebildeten Gehäuse ist ebenfalls eine Leiterplatte 2 vorgesehen. Vom Bodenteil 1 ragt ebenfalls eine Lasche 6 nach oben und zwar ebenfalls durch eine Öffnung 5 in der Leiterplatte 2, die im Gegensatz zum Ausführungsbeispiel gemäß Fig.1 bis 3 nicht schlitzförmig ist, sondern eine geschlossene Kontur aufweist.

Auch hier ist ein gesondertes Erdungsteil 17 vorgesehen, das über Kontaktfahnen 18, beim Ausführungsbeispiel 4 Kontaktfahnen 18, in der Leiterplatte 2 befestigt, nämlich eingelötet ist. Wie es sich insbesondere aus den Fig. 7 bis 9 ergibt, sind hier nicht Kontaktzungen vorgesehen, sondern ist ein Schlitz 19 vorgesehen, dessen Breite etwas geringer ist als die Dicke der Lasche 6.

Beim Zusammenbau, d.h. beim Aufsetzen der Leiterplatte 2 auf die entsprechenden Stützeinrichtungen am Bodenteil 1, dringt das Oberende 20 der Lasche 6 durch den Schlitz 19 und drückt sich an dessen Seitenflächen 20,21 an und erreicht so einen sicheren elektrischen Kontakt.

Bei diesem Ausführungsbeispiel eines Erdungsteils ist an dem Erdungsteil 17 zusätzlich ein in einer zur Leiterplatte parallelen Ebene wegragender stiftartiger Kontaktfortsatz 22 vorgesehen, der im eingebauten Zustand des Erdungsteils 17 (Fig.6) über die Leiterplatte 2 hinaus wegragt und so Anschlußteil zu einer in einem Stirnteil 23 des Gehäuses vorgesehenen Klemme 24 sein. Diese Ausführungsform ist vor allem dann zweckmäßig, wenn die Masseverbindung zur Leuchte nicht über eine Schraubverbindung des Bodenteils mit der Leuchte sondern über eine Klemmen-Verbindung erfolgt oder wenn eine Klemmen-Verbindung aus anderen Gründen vorzusehen ist.

Wie bei dem ersten Ausführungsbeispiel ist auch das Erdungsteil 17 ein Blech-Stanzteil aus verzinntem Messing, wobei die hier vier Kontaktfahnen 18 noch umzubiegen sind (Fig.8, Fig.9).

Wie auch das erste Ausführungsbeispiel eignet sich das zweite Ausführungsbeispiel des Erdungsteils zur automatischen Bestückung.

Wie erwähnt kann die für die Masse-Verbindung verwendete Lasche 6 des Bodenteils 1 auch Stützelement für die Leiterplatte 2 sein. Dies muß nicht notwendigerweise der Fall sein. Wie erwähnt, kann die Abstützung auch in anderer Weise erfolgen beispielsweise über ein entsprechendes Abstützteil 3a des Transformators 3 des ersten Ausführungsbeispiels (Fig. 1 bis Fig. 3) und/oder über eine entsprechende Ausbildung des Stirnteils 23, wobei diese beiden Teile zweckmäßig aus Kunststoff bestehen und daher kostengünstig hergestellte Teile sind.

Insgesamt kann eine Masse-Verbindung stets gewährleistet werden, wobei automatische Bestückung und automatischer Zusammenbau möglich sind. Zusätzliche Schritte, insbesondere solche die nicht automatisierbar sind, sind nicht erforderlich.

## Patentansprüche

1. Anordnung zur Masseverbindung bei elektronischen Vorschaltgeräten vorzugsweise für Leuchten, aufweisend ein metallisches Bodenteil (1) in Form eines U-Rahmens und eine mit elektrischen Bauteilen bestückte Leiterplatte (2),
wobei die Masseverbindung von einer entsprechenden Leiterfläche der Leiterplatte (2) aus über eine am Bodenteil (1) vorgesehene nach oben weg ragende Lasche (6) erfolgt, deren Oberende (20) durch eine Öffnung (5) der Leiterplatte (2) hindurchragt,
**gekennzeichnet durch**
ein wie ein elektrisches Bauteil in der Leiterplatte (2) befestigtes und mit der Masse-Leiterfläche leitend verbundenes Erdungsteil (7;17), das ein Kontaktelement (9,10;19) aufweist, das bei in der Leiterplatte (2) eingesetztem Zustand so in den Bereich der Öffnung (5) der Leiterplatte (2) ragt, daß bei Einsetzen der Leiterplatte (2) in das Bodenteil (1) das Kontaktelement (9,10;19) am Oberende (20) der Lasche (6) unter Anpressung anliegt.

2. Anordnung nach Anspruch 1,
**dadurch gekennzeichnet**
daß das Erdungsteil (7;17) ein Blech-Stanzteil ist, bei dem Kontaktfahnen (8,18) umgebogen sind, für das Einsetzen in die Leiterplatte (2) und zu leitenden Verbindung mit der Masse-Leiterfläche, wie durch Verlöten.

3. Anordnung nach Anspruch 1 oder 2,
**dadurch gekennzeichnet**
daß das Kontaktelement mindestens eine Kontaktzunge (9,10) ist, die am Oberende (20) der Lasche (6) unter elastischer Vorspannung anliegt.

4. Anordnung nach Anspruch 3,
**gekennzeichnet durch**
zwei sich in einer zur Ebene der Leiterplatte (2) parallelen Ebene gegenüberliegende Kontaktzungen (9,10), deren Abstand geringfügig kleiner ist, als die Dicke der Lasche (6), an der sie zur Anlage kommen.

5. Anordnung nach Anspruch 4,
**dadurch gekennzeichnet,**
daß ausgehend vom Bereich der Kontaktfahnen (8) die Kontaktzungen (9,10) in Form von U-Schenkeln in der Ebene wegragen.

6. Anordnung nach Anspruch 5,
**dadurch gekennzeichnet**
daß ferner die Enden der U-Schenkel der Kontaktzungen (9,10), in der Ebene bleibend, nach innen ebenfalls U-förmig umgebogen verlaufen.

7. Anordnung nach Anspruch 1 oder 2,
**dadurch gekennzeichnet**
daß das Kontaktelement ein Schlitz (19) im Erdungsteil (17) ist, dessen Breite geringfügig kleiner ist, als die Dicke der Lasche (6), über die der Schlitz (19) aufschiebbar ist.

8. Anordnung nach einem der Ansprüche 1 bis 7,
**gekennzeichnet durch**
einen stiftartigen Kontaktfortsatz (22), der in einer Ebene parallel zur Leiterplatte (2) nach außerhalb der Leiterplatte (2) als Anschlußteil zu einer Klemme (24) wegragt.

9. Anordnung nach einem der Ansprüche 1 bis 8,
**dadurch gekennzeichnet**
daß die Lasche (6) durch einen umgebogenen Ausbruch des Bodenteils (1) gebildet ist.

## Claims

1. Arrangement for making earthing connection of electronic ballasts preferably for lights, having a metallic base part (1) in the form of a U-frame and having a circuit board (2) on which electrical components are mounted,
the earthing connection being established from a corresponding conductor surface of the circuit board (2) by way of a tab provided on the base part (1) projecting upwardly away therefrom, the upper end (20) of the tab projecting through an opening (5) in the circuit board (2),
characterised by
an earthing part (7; 17) attached in the circuit board (2) in the manner of an electrical component and conductively connected with the ground conductor surface, the earthing part having a contact element (9, 10; 19) which, in the placed into the circuit board (2) condition, projects into the region of the opening (5) of the circuit board (2) in such a manner that upon placement of the circuit board (2) into the base part (1) the contact element (9, 10; 19) bears upon the upper end (20) of the tab (6), pressing against it.

2. Arrangement according to claim 1,
characterised in that,
the earthing part (7; 17) is a stamped out sheet metal part of which contact lugs (8, 18) are folded over for placement into the circuit board (2) and for conductive connection with the ground conductor surface, such as by soldering.

3. Arrangement according to claim 1 or 2,
characterised in that,
the contact element is at least one contact tongue (9, 10) which bears against the upper end (20) of the tab (6) under elastic biasing.

4. Arrangement according to claim 3,
characterised by
two contact tongues (9, 10) lying opposed to one another in a plane parallel to the plane of the circuit board (2), the spacing between which tongues is slightly less than the thickness of the tab (6), against which they come to bear.

5. Arrangement according to claim 4,
characterised in that,
from the region of the contact lugs (8), the contact tongues (9, 10) project away, in the plane, in the form of U-limbs.

6. Arrangement according to claim 5,
characterised in that,
further, the ends of the U-limbs of the contact tongues (9, 10) extend, remaining in the plane, turned inwardly, likewise in U-shape.

7. Arrangement according to claim 1 or 2,
characterised in that,
the contact element is a slit (19) in the earthing part (17), the width of which slit is slightly smaller than the thickness of the tab (6), over which the slit (19) can be pushed.

8. Arrangement according to any of claims 1 to 7,
characterised by
a pin-like contact extension (22) which projects away, in a plane parallel to the circuit board (2), beyond the circuit board (2), as a connection part to a clamp (24).

9. Arrangement according to any of claims 1 to 8,
characterised in that,
the tab (6) is formed by a part folded over out of the base part (1).

## Revendications

1. Dispositif pour la mise à la masse de ballasts électroniques, de préférence pour des appareils d'éclairage, comportant une partie de fond (1) métallique qui se présente sous la forme d'un cadre en U et une carte (2) à circuit imprimé équipée de composants électriques, la liaison de mise à la masse étant réalisée à partir d'une surface conductrice adaptée de la carte (2) à circuit imprimé par l'intermédiaire d'une patte (6) qui est prévue sur la partie de fond (1) et fait saillie vers le haut et dont l'extrémité (20) supérieure pénètre dans un orifice (5) de la carte (2) à circuit imprimé, caractérisé par une pièce (7; 17) de mise à la terre qui est montée sur la carte (2) à circuit imprimé de la même manière qu'un composant électrique et est liée de manière conductrice à la surface conductrice de mise à la masse, laquelle pièce comporte un élément de contact (9, 10; 19) qui, à l'état monté sur la carte (2) à circuit imprimé, fait saillie dans la région de l'orifice (5) de ladite carte (2) à circuit imprimé de manière telle qu'au moment du montage de la carte (2) à circuit imprimé sur la partie de fond (1), l'élément de contact (9, 10; 19) soit appliqué avec pression sur l'extrémité (20) supérieure de la patte (6).

2. Dispositif selon la revendication 1, caractérisé par le fait que la pièce de mise à la terre (7; 17) est une pièce découpée en tôle avec des pattes de contact (8, 18) pliées pour le montage dans la carte (2) à circuit imprimé et pour la liaison conductrice avec la surface conductrice de mise à la masse, par exemple par soudage.

3. Dispositif selon la revendication 1 ou la revendication 2, caractérisé par le fait que l'élément de contact est constitué par au moins une languette de contact (9, 10) qui est appliquée avec précontrainte élastique contre l'extrémité (20) supérieure de la patte (6).

4. Dispositif selon la revendication 3, caractérisé par deux languettes de contact (9, 10) disposées en vis-à-vis dans un plan parallèle au plan de la carte (2) à circuit imprimé qui sont séparées d'une distance inférieure à l'épaisseur de la patte (6) sur laquelle elles viennent en appui.

5. Dispositif selon la revendication 4, caractérisé par le fait que les languettes de contact (9, 10) font saillie dans le plan sous la forme de branches d'un U à partir de la zone des pattes de contact (8).

6. Dispositif selon la revendication 5, caractérisé par le fait qu'en outre les extrémités des branches de U des languettes de contact (9, 10) sont pliées vers l'intérieur, également en U, en restant dans le plan.

7. Dispositif selon la revendication 1 ou la revendication 2, caractérisé par le fait que l'élément de contact est une fente (19) dans la pièce de mise à la terre (17), dont la largeur est légèrement inférieure à l'épaisseur de la patte (6) sur laquelle la fente (19) s'engage.

8. Dispositif selon l'une des revendications 1 à 7, caractérisé par un prolongement (22) de contact en forme de tige qui fait saillie dans un plan parallèle à la carte (2) à circuit imprimé, vers l'extérieur de ladite carte (2) à circuit imprimé, en tant que pièce de connexion à une borne de connexion (24).

9. Dispositif selon l'une des revendications 1 à 8, caractérisé par le fait que la patte (6) est constituée par une crevée dans la partie de fond (1).
